# EUROPÄISCHE PATENTSCHRIFT

(11) **EP 1 453 251 B1**
(45) Veröffentlichungstag und Bekanntmachung des Hinweises auf die Patenterteilung: **01.08.2012**
(21) Anmeldenummer: 04000776.7
(22) Anmeldetag: 15.01.2004
(51) Int. Cl.: H04L 12/56

(54) **Echtzeit- und Nicht-Echtzeitverkehr in einem lokalen Netz**
Real-time and non-real-time traffic in a Local Area Network
Trafic en temps réel et en temps non-réel dans un réseau local

(30) Priorität: 28.02.2003 DE 10309164
(43) Veröffentlichungstag der Anmeldung: 01.09.2004
(73) Patentinhaber: SIEMENS AKTIENGESELLSCHAFT, 80333 München (DE)
(72) Erfinder: Weber, Karl, Dr., 90518 Altdorf (DE)

(56) Entgegenhaltungen:
- WO-A-98/34415
- US-A- 4 819 229
- US-A1- 2001 002 195

## Beschreibung

Die Erfindung betrifft ein Verfahren und ein schaltendes Koppelelement zum einfachen Scheduling von Echtzeit-Datentelegrammen bei kalkulierbaren, lastunabhängigen Zykluszeiten.

Das Ethernet wird heutzutage vermehrt im Automatisierungsumfeld eingesetzt. Ein Automatisierungssystem erfordert eine kalkulierbare Reaktionszeit. Es muss sichergestellt sein, dass Daten innerhalb eines definierten Zeitraumes übertragen werden können. Eine Komponente der Reaktionszeit ist bei der Datenübertragung die Zykluszeit. Bei der Verwendung eines Ethernet ist die Kalkulierbarkeit der Reaktionszeit bzw. der Zykluszeit primär nicht gegeben. Dies liegt an der Tatsache, dass das zugrundegelegte Regelwerk nach einem sogenannten "best effort"-Prinzip arbeitet. Dieses Prinzip stellt in der Regel gute Reaktionszeiten sicher, es ist jedoch belastungsabhängig. Das heißt bei hohem Kommunikationsaufwand bzw. bei einer hohen Anzahl von übertragenden Daten ist eine Gewährleistung der Reaktionszeit nicht gegeben.

Es gibt verschiedene Methoden, um diese Schwäche prinzipiell zu umgehen. In der Regel laufen die Verfahren darauf hinaus, dass Spezial-Netzwerkkomponenten verwendet werden oder der Betrieb von Standard-Ethernetknoten verboten wird. Das schränkt jedoch die Anwendbarkeit und die Akzeptanz dieser Technik wesentlich ein.

Aus der Anmeldung mit dem Kennzeichen 10058524.8 ist ein Verfahren zur Übertragung von Daten über schaltbare Datennetze, insbesondere ein Ethernet im Bereich industrieller Anlagen, bekannt, bei dem echtzeitkritische und nicht echtzeitkritische Daten übertragen werden, wobei die Daten in einem Übertragungszyklus mit einstellbarer Zeitdauer übertragen werden, wobei jeder Übertragungszyklus in einen ersten Bereich zur Übertragung von echtzeitkritischen Daten zur Echtzeitsteuerung und einen zweiten Bereich zur Übertragung von nicht echtzeitkritischen Daten unterteilt ist.

Aus der US 2001/0002195 A1 ist ein Verfahren zur Übertragung von Daten über ein Netz bekannt, bei welchem den an das Netz angeschlossenen Geräten Geräteadapter vorgeschaltet sind. Die Geräteadapter sind aufeinander synchronisiert und arbeiten mit Sendezyklen, die in Phasen unterteilt sind, in welchen jeweils ein Geräteadapter eine Sendeberechtigung zur Übertragung seiner Echtzeitdaten innehat. Tritt bei der Übertragung von Echtzeitdaten dennoch eine Kollision mit einem Nicht-Echtzeit-Datentelegramm auf, dessen Übertragung noch nicht abgeschlossen wurde, kann die Übertragung des Nicht-Echtzeit-Datentelegramms unterbrochen und mit kurzer Verzögerung das Echtzeit-Datentelegramm übertragen werden.

Der Erfindung liegt die Aufgabe zugrunde, ein Verfahren anzugeben, welches die Übertragung von echtzeitkritischen und nicht echtzeitkritischen Daten im Rahmen eines Netzwerkes, insbesondere eines Ethernet, für ein Automatisierungssystem verbessert.

Die Aufgabe wird gelöst durch ein Verfahren mit den in Anspruch 1 angegebenen Merkmalen sowie durch ein schaltendes Koppelelement mit den in Anspruch 7 angegebenen Merkmalen.

Der Vorteil des hier beschriebenen Verfahrens besteht darin, dass Echtzeit-Datentelegramme, sogenannte Real Time Data, mit kalkulierbaren und lastunabhängigen Zykluszeiten versendet werden können. Das Verfahren erlaubt ein sogenanntes Scheduling, bei dem bestimmte Zykluszeiten ausschließlich für den Versand von Echtzeitdaten reserviert sind. Während dieser Phasen werden lange Nicht-Echtzeit-Datentelegramme im System angehalten bzw. nicht weitergeleitet. Das Verfahren funktioniert gewissermaßen nach einer Art Ampelsteuerung, mit der der Echtzeit-Datenverkehr mit einer bestimmbaren Verzögerungszeit durch das System geleitet wird. Bevor die Phase für den Echtzeit-Datenverkehr jedoch beginnt, gibt es eine Art Zwischenphase, in der kurze Nicht-Echtzeit-Datentelegramme noch versendet werden können, um die Kapazität des Datenübertragungssystems möglichst effizient auszunutzen. Während dieser Phase werden nur lange Echtzeit-Datentelegramme nicht weiterversendet. Diese Phase ist vorteilhaft, um bei Eintritt in die Realtime-Phase bereits ein Netz vorzufinden, das frei von störenden langen Telegrammen ist. Bei geringen Anforderungen an Echtzeitfähigkeit könnte diese Phase auch entfallen. Dann gibt es allerdings Jitter in der RT-Phase, was zu einer Verlängerung dieser führt.

Eine Realisierung des Verfahrens erfolgt auf den schaltenden Koppelelementen bzw. den Switches mit Hilfe von implementierten Prioritäten. In Abhängigkeit von der Priorität werden in den unterschiedlichen Phasen die Datentelegramme versendet. Beispielsweise wird bei einer Priorität von Null oder Eins alles weitergesendet, was an dem jeweiligen schaltenden Koppelelement (Switch) an Datenverkehr anfällt. Während dieser Priorität können sowohl Echtzeit-Datentelegramme als auch Nicht-Echtzeit-Datentelegramme versendet werden. Bei einer Priorität von Zwei werden nur kurze Datentelegramme versendet, die sozusagen die Kapazitäten auffüllen, die jedoch mit Sicherheit während der Phase abgeschlossen werden können. Das heißt, es ist gewährleistet, dass zu Beginn der nächsten Phase, die durch die Priorität Drei definiert ist kein Datenstau vorliegt und das Kommunikationssystem bzw. das Ethernet frei ist für den Datenverkehr der Echtzeit-Datentelegramme. Durch die kurzen Nachrichten der Priorität Zwei werden einerseits die Prioritäten Null und Eins blockiert, andererseits die Priorität Drei durchgeleitet.

Bei einem derartigen Verfahren ist es wichtig, dass die schaltenden Koppelelemente bzw. Switches zeitsynchronisiert arbeiten. Sie müssen alle zur gleichen Zeit mit der gleichen Priorität arbeiten, damit die Echtzeit-Datentelegramme dann auch störungsfrei über das Datenübertragungssystem weitergeleitet werden können. Die Switches müssen also bezüglich ihrer Prioritäten und Phasen synchronisiert sein. Hierzu ist im Rahmen des erfindungsgemäßen Verfahrens eine Möglichkeit angegeben, wie die Zeitsynchronisation mittels einer Berechnung der Verzögerung der Datenübertragung zwischen zwei Knoten im Netz, also zwei Switches, berechnet werden kann. Gleichzeitig wird ein Synchronisationssignal verwendet, um zusätzlich zur Verzögerungszeit eine Synchronisation der beteiligten Knoten im Netz zu ermöglichen.

Das Verfahren beruht auf einer Kombination, welche sowohl eine Hardwarelösung erlaubt, wie sie beispielsweise in der internationalen Anmeldung PCT/WO 99 150722 vorgeschlagen wird, als auch dem Precision Time Protocol PTP (IEEE 1588), welches das Follow-up-Prinzip verwendet. Durch die Kombination der beiden Methoden lässt sich auch auf Standard-Switches kostengünstig ein optimales Zeitsynchronisationsverfahren realisieren.

Die Verwendung eines schaltenden Koppelelementes bzw. Switches im Rahmen des Verfahrens, bei dem unterschiedliche Prioritäten implementiert sind, die ein Versenden von Echtzeit-Datentelegrammen bzw. Nicht-Echtzeit-Datentelegrammen zu unterschiedlichen Phasen erlauben, ist vorteilhaft, da eine kostengünstige Implementierung eines entsprechenden Ethernet hiermit möglich wird. Standardkomponenten können im Rahmen des Datenübertragungssystems eingesetzt werden, was zu einer erhöhten Akzeptanz der Ethernet-Technologie im Rahmen des Automatisierungsumfelds führt. Besonders günstig bei dem beschriebenen Verfahren ist die Implementierung der unterschiedlichen Prioritäten mit einer für die Echtzeit-Datenkommunikation reservierten Phase und einer Phase, in der die Kapazität des Datenübertragungssystems zwar genutzt werden kann, indem kleine Fülltelegramme mit kurzer Sendedauer verwendet werden, lange Nicht-Echtzeit-Datentelegramme jedoch zurückgehalten werden und somit im Rahmen des Datenübertragungssystems ein Datenstau vermieden wird, der unter Umständen zu einer Verzögerung der Übertragung der Echtzeit-Datentelegramme führen könnte. Insgesamt wird hierdurch eine bestimmbare Zykluszeit für die Übermittlung von Echtzeit-Datentelegramme gewährleistet.

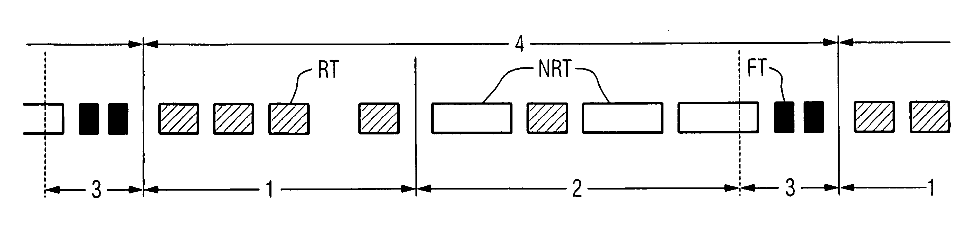

Die Erfindung wird im Folgenden anhand des Ausführungsbeispiels in der Figur näher beschrieben und erläutert.

Die Figur zeigt ein für die Datenübertragung implementiertes Verfahren, bei dem über ein Datennetz, welches insbesondere als Ethernet ausgebildet ist, in einer ersten Phase 1 Echtzeit-Datentelegramme RT versendet werden, in einer zweiten Phase 2 Nicht-Echtzeit-Datentelegramme NRT und Echtzeit-Datentelegramme RT versendet werden und in einer dritten Phase 3 der Versand von langen Nicht-Echtzeit-Datentelegrammen NRT unterbunden wird. Die drei Phasen 1, 2, 3 zusammengefasst ergeben den Sendezyklus 4. Hierbei ist die Reihenfolge der Phasen insofern relevant, als das vor der ersten Phase 1, die zum Versenden der Echtzeit-Datentelegramme RT vorgesehen ist, die dritte Phase 3 vorgeschaltet ist, in der ein Versand langer Nicht-Echtzeit-Datentelegramme NRT unterbunden wird. Ein Sendezyklus 4 besteht immer aus allen drei Phasen, muss jedoch nicht notwendigerweise bei der ersten Phase 1 beginnen. Ein Beginnen des Sendezyklus 4 mit der zweiten oder dritten Phase 2, 3 ist ebenfalls denkbar. Die Länge des Sendezyklus 4 ändert sich bei einer Verschiebung jedoch nicht.

Das Verfahren funktioniert prinzipiell wie eine Art Ampelsteuerung, mit Hilfe deren der Echtzeit-Datenverkehr RT mit einer bestimmbaren Verzögerungszeit durch das System geleitet wird. Um eine konstante Zykluszeit zu gewährleisten, wird der Nicht-Echtzeit-Datenverkehr NRT ab einem bestimmten Zeitpunkt innerhalb des Sendezyklus 4 unterbunden. Hierdurch wird eine Vorhersagbarkeit des Echtzeit-Datenverkehrs RT gewährleistet. Innerhalb der ersten Phase 1 werden ausschließlich Echtzeit-Daten RT versendet. Diese Phase beginnt zu einem bestimmten Zeitpunkt innerhalb des Sendezyklus 4. Diese ersten Phase 1 ist auf einen begrenzten Zeitraum beschränkt (etwa 100 bis 200 µsec ist die Dauer der Phase). Eine sich anschließende zweite Phase 2 in der Nicht-Echtzeitdaten NRT zusammen mit Echtzeitdaten RT versendet werden, schließt sich an. Der Wechsel zur Phase 1, in der ausschließlich wieder Echtzeitdaten RT versendet werden, ist derart realisiert, dass in einer dritten Phase 3 lange Nicht-Echtzeitdaten NRT aufgehalten werden, so dass ein Datenstau unterbunden wird und bei Beginn der nächsten Phase 1ᵢ im anschließenden Sendezyklus 4ᵢ das Datenübertragungssystem frei ist für die Übertragung der Echtzeit-Datentelegramme RT. In der dritten Phase 3 können jedoch kleine Fülltelegramme FT versendet werden, deren Versand innerhalb der dritten Phase 3 garantiert abgeschlossen werden kann.

Das angegebene Verfahren basiert auf einer Zeitsynchronisation zwischen den an der Datenkommunikation beteiligten Knoten bzw. Switches. Hierbei wird zur Zeitsynchronisation ein Kombinationsverfahren verwendet, bei dem eine Verzögerung der Datenübertragung zwischen zwei Knoten angegeben wird und ein Signal zur Zeitsynchronisation zwischen den Knoten versendet wird. Die Berechnung der Verzögerung an einem bestimmten Knoten bzw. zwischen einer bestimmten Verbindung kann auf Basis einer Schätzung durchgeführt werden (eine 100 m Linie weist ungefähr 500 ns Verzögerung auf). Bei einem einfachen Design kann ein mittlerer Wert von 300 ns angegeben werden, um den sich der Empfang einer Nachricht zwischen zwei Knoten verzögert.

Bei der Weiterleitung eines Zeitsynchronisationssignals kann auch eine automatische Berechnung der Verzögerung mit Hilfe einer Zeitnachricht erfolgen. Hierbei wird ein sogenanntes "Follow-up"-Prinzip verwendet. Bei dem Prinzip wird ein erstes Zeitdatentelegramm mit einer speziellen Zahlensequenz versendet. Dieses erste Datentelegramm wird gefolgt von einem zweiten mit der selben Zahlsequenz, welches zusätzlich die Zeit beinhaltet, zu der das erste abgesendet wurde. Auf Basis der beiden Datentelegramme kann die Verzögerungszeit die zwischen dem Sender und dem Empfänger aufgetreten ist, berechnet werden. Die beiden Datentelegramme werden mit bestimmten, reservierten Sendeadressen versendet, so dass sie als zur Zeitsynchronisation gehörend erkannt werden und entsprechend aus dem System herausgefiltert werden können. Eine Verwechslung mit normalen Datentelegrammen ist somit nicht möglich. Das Synchronisationssignal soll die Zeit beinhalten, zu der es abgesendet wurde und zusätzlich alle lokalen Zeitverzögerungen.

Im Folgenden ist eine Prozedur angegeben, die für die Versendung des Synchronisationssignals verwendet werden kann:

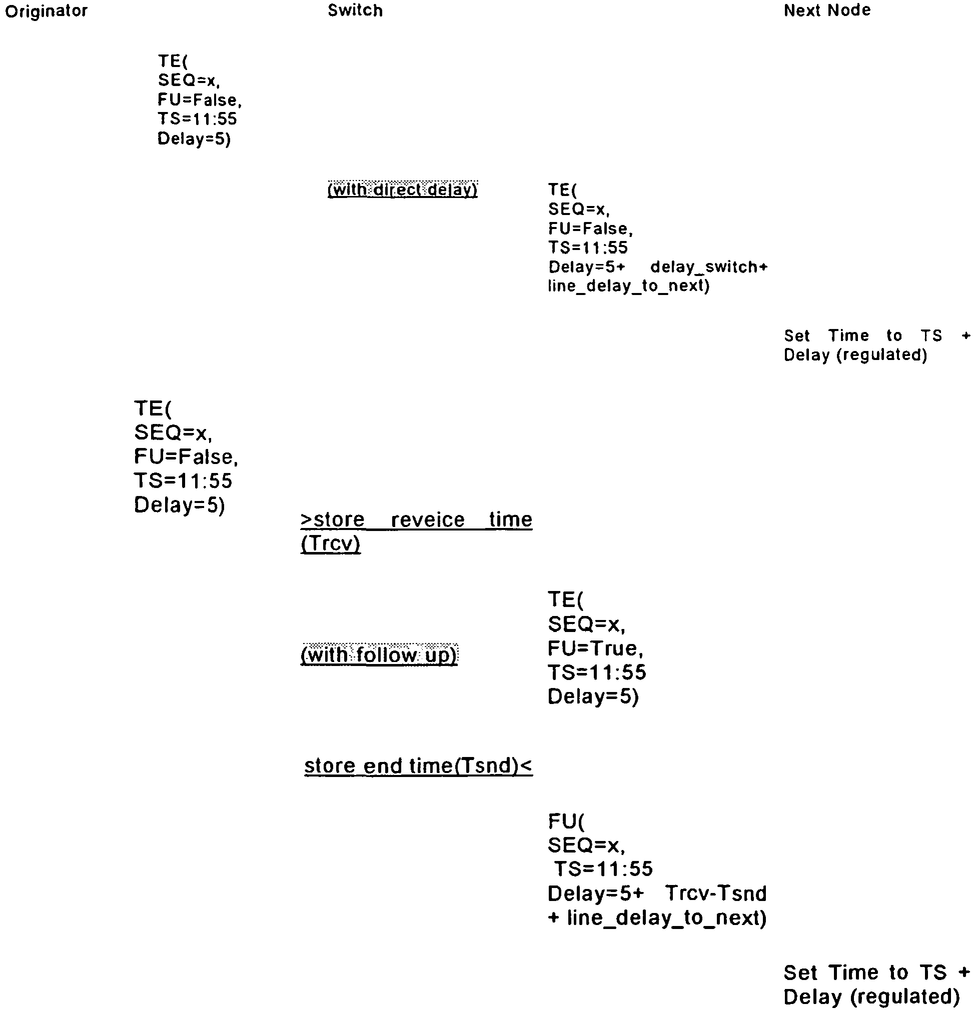

Zusammenfassend betrifft die Erfindung ein Verfahren und ein schaltendes Koppelelement zum einfachen Scheduling von Echtzeit-Datentelegrammen bei kalkulierbaren, lastunabhängigen Zykluszeiten. Hierbei wird ein Sendezyklus 4 in drei Phasen unterteilt. In einer ersten Phase 1 werden nur Echtzeit-Datentelegramme versendet, in einer zweiten Phase 2 Echtzeitund Nicht-Echtzeit-Datentelegramme und in einer dritten Phase 3 wird der Versand von langen Nicht-Echtzeit-Datentelegrammen unterbunden. Kurze Fülltelegramme können während der Phase 3 versendet werden. Hierdurch wird gewährleistet, dass die Datenübertragung der Echtzeit-Datentelegramme reibungslos verläuft. Der Versand in bestimmten Phasen wird mittels den Datentelegrammen zugeordneten Prioritäten geregelt.

## Patentansprüche

1. Verfahren zur Datenübertragung über ein Netz (5), insbesondere ein Ethernet, bei dem
- in einer ersten Phase (1) während eines Sendezyklus (4) Echtzeit-Datentelegramme über das Netz (5) versendet und/oder weitergeleitet werden,
- in einer zweiten Phase (2) während eines Sendezyklus (4) Echtzeit-Datentelegramme und/oder Nicht-Echtzeit-Datentelegramme über das Netz (5) versendet und/oder weitergeleitet werden und **dadurch gekennzeichnet, dass**
- in einer dritten Phase (3) während eines Sendezyklus (4) das Weiterleiten und/oder Versenden von Nicht-Echtzeit-Datentelegrammen, deren Übertragung während der dritten Phase nicht abgeschlossen werden kann, unterbunden wird,
wobei sich an die dritte Phase (3) ein neuer Sendezyklus (4ᵢ) mit einer neuen ersten Phase (1ᵢ), in welcher Echtzeit-Datentelegramme versendet werden, anschließt.

2. Verfahren nach Anspruch 1,
**dadurch gekennzeichnet,**
**dass** das Verfahren auf einem schaltenden Koppelelement implementiert ist, wobei das schaltende Koppelelement mindestens über vier Sendeprioritäten verfügt.

3. Verfahren nach einem der Ansprüche 1 oder 2,
**dadurch gekennzeichnet,**
**dass** in der dritten Phase (3) kurze Füll-Telegramme, deren Versand vor Beginn der neuen ersten Phase (1ᵢ) abgeschlossen ist, versendet und/oder weitergeleitet werden.

4. Verfahren nach einem der Ansprüche 1 bis 3,
**dadurch gekennzeichnet,**
**dass** eine Zeitsynchronisation der schaltenden Koppelelemente durchgeführt wird.

5. Verfahren nach Anspruch 4,
**dadurch gekennzeichnet,**
**dass** die Zeitsynchronisation mittels einer Berechnung der Verzögerung zwischen zwei Knoten des Netzes (5) in Kombination mit der Verwendung eines Synchronisationssignals durchgeführt wird.

6. Verfahren nach einem der Ansprüche 1 bis 5,
**dadurch gekennzeichnet,**
**dass** das Netz (5) als Linie ausgebildet ist.

7. Schaltendes Koppelelement zur Datenübertragung über ein Netz (5), insbesondere ein Ethernet, mit mindestens vier implementierten Prioritäten, wobei das schaltende Koppelelement zum Versenden und/oder Weiterleiten
- von Echtzeit-Datentelegrammen über das Netz (5) in einer ersten Phase (1) während eines Sendezyklus (4) in Abhängigkeit von der entsprechenden Priorität,
- von Echtzeit-Datentelegrammen und/oder Nicht-Echtzeit-Datentelegrammen über das Netz (5) in einer zweiten Phase (2) während eines Sendezyklus (4) in Abhängigkeit von der entsprechenden Priorität vorgesehen ist und **dadurch gekennzeichnet, dass** das schaltende Koppelelement, vorgesehen ist
- zum Unterbinden des Weiterleitens und/oder Versendens von Nicht-Echtzeit-Datentelegrammen in einer dritten Phase (3) während eines Sendezyklus (4), deren Übertragung während der dritten Phase nicht abgeschlossen werden kann, in Abhängigkeit von der entsprechenden Priorität.

## Claims

1. Method for the transmission of data via a network (5), particularly an Ethernet, in which
- in a first phase (1), during a transmit cycle (4), real-time data messages are dispatched and/or forwarded via the network (5),
- in a second phase (2), during a transmit cycle (4), real-time data messages and/or non-real-time data messages are dispatched and/or forwarded via the network (5), and **characterized in that**
- in a third phase (3), during a transmit cycle (4), the forwarding and/or dispatching of non-real-time data messages, the transmission of which cannot be concluded during the third phase, is prevented, the third phase (3) being followed by a new transmit cycle (4ᵢ) with a new first phase (1ᵢ), in which real-time data messages are dispatched.

2. Method according to Claim 1, **characterized in that** the method is implemented on a switch, the switch having at least four transmit priorities.

3. Method according to one of Claims 1 or 2, **characterized in that** in the third phase (3), short dummy messages, the dispatch of which is concluded before the beginning of the new first phase (1ᵢ), are dispatched and/or forwarded.

4. Method according to one of Claims 1 to 3, **characterized in that** a time synchronization of the switches is performed.

5. Method according to Claim 4, **characterized in that** the time synchronization is performed by means of a calculation of the delay between two nodes of the network (5) in combination with the use of a synchronization signal.

6. Method according to one of Claims 1 to 5, **characterized in that** the network (5) is constructed as a line.

7. Switch for the transmission of data via a network (5), particularly an Ethernet, having at least four implemented priorities, wherein the switch is provided for dispatching and/or forwarding
- real-time data messages via the network (5) in a first phase (1) during a transmit cycle (4) in dependence on the corresponding priority,
- of real-time data messages and/or non-real-time data messages via the network (5) in a second phase (2) during a transmit cycle (4) in dependence on the corresponding priority, and **characterized in that** the switch
- is provided for preventing the forwarding and/or dispatching of non-real-time data messages, the transmission of which cannot be concluded during the third phase, in a third phase (3) during a transmit cycle (4) in dependence on the corresponding priority.

## Revendications

1. Procédé de transmission de données par un réseau (5), notamment par un éthernet, dans lequel
- dans une première phase ( 1 ), on envoie et/ou on achemine par le réseau ( 5 ) des télégrammes de données en temps réel pendant un cycle ( 4 ) d'envoi,
- dans une deuxième phase ( 2 ), on envoie et/ou on achemine par le réseau ( 5 ) des télégrammes de données en temps réel et/ou des télégrammes de données en temps non réel pendant un cycle ( 4 ) d'envoi et **caractérisé en ce que**
- dans une troisième phase ( 3 ), on supprime pendant un cycle ( 4 ) d'envoi l'acheminement et/ou l'envoi de télégrammes de données en temps non réel, dont la transmission ne peut pas être terminée pendant la troisième phase, dans lequel à la troisième phase ( 3 ) se raccorde un cycle ( 4ᵢ ) d'envoi nouveau ayant une nouvelle première phase ( 1ᵢ ), dans laquelle des télégrammes de données en temps réel sont envoyés.

2. Procédé suivant la revendication 1,
**caractérisé**
**en ce qu'**on met en oeuvre le procédé sur un élément de couplage à commutation, l'élément de couplage à commutation disposant d'au moins quatre priorités d'envoi.

3. Procédé suivant l'une des revendications 1 ou 2,
**caractérisé**
**en ce que**, dans la troisième phase ( 3 ), on envoie et/ou on achemine des télégrammes de remplissage courts, dont l'envoi est terminé avant le début de la nouvelle première phase ( 1ᵢ ).

4. Procédé suivant l'une des revendications 1 à 3, **caractérisé**
**en ce qu'**on effectue une synchronisation dans le temps des éléments de couplage à commutation.

5. Procédé suivant la revendication 4,
**caractérisé**
**en ce qu'**on effectue la synchronisation dans le temps au moyen d'un calcul du retard entre deux noeuds du réseau (5) en combinaison avec l'utilisation d'un signal de synchronisation.

6. Procédé suivant l'une des revendications 1 à 5,
**caractérisé**
**en ce qu'**on constitue le réseau ( 5 ) sous la forme d'une ligne.

7. Elément de couplage à commutation pour la transmission de données par un réseau ( 5 ), notamment un éthernet, comprenant au moins quatre priorités mises en oeuvre, l'élément de couplage à commutation étant prévu pour l'envoi et/ou l'acheminement
- de télégrammes de données en temps réel par le réseau ( 5 ) dans une première phase ( 1 ) pendant un cycle ( 4 ) d'envoi en fonction de la priorité correspondante,
- de télégrammes de données en temps réel et/ou de télégrammes en temps non réel par le réseau (5 ) dans une deuxième phase (2) pendant un cycle (4) d'envoi en fonction de la priorité correspondante et **caractérisé en ce que** l'élément de couplage à commutation est prévu pour
- supprimer l'acheminement et/ou l'envoi de télégrammes de données en temps non réel dans une troisième phase ( 3 ) pendant un cycle ( 4 ) d'envoi, dont la transmission ne peut pas être terminée pendant la troisième phase, en fonction de la priorité correspondante.
